# EUROPÄISCHE PATENTSCHRIFT

(11) **EP 2 621 754 B1**
(45) Veröffentlichungstag und Bekanntmachung des Hinweises auf die Patenterteilung: **02.07.2014**
(21) Anmeldenummer: 11767922.5
(22) Anmeldetag: 26.09.2011
(51) Int. Cl.: B60N 2/07

(54) **LÄNGSVERSTELLER FÜR EINEN FAHRZEUGSITZ**
LONGITUDINAL ADJUSTING DEVICE FOR A VEHICLE SEAT
DISPOSITIF DE DÉPLACEMENT LONGITUDINAL POUR UN SIÈGE DE VÉHICULE

(30) Priorität: 30.09.2010 DE 102010047043
(43) Veröffentlichungstag der Anmeldung: 07.08.2013
(73) Patentinhaber: Johnson Controls GmbH, 51399 Burscheid (DE)
(72) Erfinder: EWALD, Tobias, 42499 Hückeswagen (DE); STEILMANN, Alfons, 57399 Kirchhundem (DE); WILLING, Thomas, 50825 Köln (DE); BECKERS, Christoph, 41470 Neuss (DE); HASSLER, Erhard, 57334 Bad Laasphe (DE); BERG, Matthias, 57271 Hilchenbach (DE)
(74) Vertreter: Wolff, Felix
(86) Internationale Anmeldenummer: PCT/EP2011/004797
(87) Internationale Veröffentlichungsnummer: WO 2012/041470

(56) Entgegenhaltungen:
- EP-A2- 1 516 772
- US-A- 5 529 397

## Beschreibung

Die vorliegende Erfindung betrifft einen Längsversteller im Fahrzeuginnenraum eines Kraftfahrzeuges mit einer Ober- und einer Unterschiene, zwischen denen mindestens ein Wälzkörper vorgesehen ist. Desweiteren betrifft die vorliegende Erfindung einen Fahrzeugsitz aufweisend den erfindungsgemäßen Längsversteller.

Die gattungsgemäßen Längsversteller sind aus dem Stand der Technik hinlänglich bekannt und werden insbesondere dazu verwendet, einen Fahrzeugsitz in Längsrichtung, d. h. in X-Richtung eines Fahrzeuges zu verstellen, um den Sitz an die Körpergröße des entsprechenden Sitzinsassen anzupassen und/oder den Fahrzeugsitz beispielsweise in eine Easy-Entry-Stellung zu überführen. Aufgrund von Fertigungstoleranzen sind bei diesen Sitzverstellem oftmals aufwändige Anpassungsschritte notwendig und/oder es treten beim Betrieb Geräusche auf. Ein gattungsgemäßer Längsversteller ist aus dem Dokument US-5 529 397 bekannt.

Es war deshalb die Aufgabe der vorliegenden Erfindung einen Längsversteller zur Verfügung zu stellen, der die Nachteile des Standes der Technik nicht aufweist.

Gelöst wird die Aufgabe mit einem Längsversteller mit den Merkmalen des Anspruchs 1.

Die vorliegende Erfindung betrifft einen Längsversteller im Innenraum eines Kraftfahrzeuges. Insbesondere handelt es sich um einen Längsversteller eines Fahrzeugsitzes. Derartige Längsversteller weisen eine Ober- und eine Unterschiene auf, wobei die Oberschiene beispielsweise mit dem Sitzteil des Fahrzeugsitzes und die Unterschiene mit der Karosserie des Fahrzeuges verbunden ist. Zur Längsverstellung ist die Oberschiene relativ zur Unterschiene verschieblich vorgesehen und in der jeweilig gewünschten Position vorzugsweise arretierbar. Zwischen den beiden Schienen ist mindestens ein vorzugsweise mehrere Wälzkörper insbesondere Kugeln vorgesehen, die die Reibung beim Verstellen vermindern.

Vorzugsweise weist der Längsversteller bezogen auf den Querschnitt mindestens zwei Kontaktbereiche auf, in denen Wälzkörper vorgesehen sind, d.h. in denen sich die beiden Schienen aneinander abstützen. Erfindungsgemäß ist an der Ober- und Unterschiene, insbesondere pro Kontaktbereich ein Vorsprung angeordnet, der einen lokalen Kontaktpunkt zwischen den beiden Schienen bildet, d. h. die Unter- und die Oberschiene liegen an dem Vorsprung direkt aneinander an. Vorzugsweise liegen die Ober- und die Unterschiene ausschließlich an dem Vorsprung direkt aneinander an.

Vorzugsweise weist der Längsversteller zwei derartige Vorsprünge insbesondere pro Kontaktbereich auf. Die Vorsprünge sind vorzugsweise bezogen auf die Längsrichtung (X-Richtung) der Schiene beabstandet voneinander vorgesehen.

Erfindungsgemäß ist der Vorsprung einstückig mit der Ober- und Unterschiene vorgesehen, d. h. besonders bevorzugt wird der Vorsprung durch Umformen aus der Ober- und Unterschiene gefertigt. Insbesondere wird der Vorsprung durch Prägen oder Biegen hergestellt. Gegebenenfalls wird erst ein Bereich aus der Ober- und/oder Unterschiene ausgestanzt und dann plastisch verformt, so dass er den erfindungsgemäßen Vorsprung bildet.

Erfindungsgemäß ist der Vorsprung federnd vorgesehen, und ganz besonders bevorzugt ist er zwischen den beiden Schienen eingespannt, d.h. elastisch deformiert.

Der Längsversteller eignet sich insbesondere für die Längsverstellung eines Fahrzeugsitzes.

Ein weiterer Gegenstand der vorliegenden Erfindung ist deshalb ein Fahrzeugsitz aufweisend einen Längsversteller gemäß einem der voranstehenden Ansprüche.

Vorzugsweise ist die Oberschiene mit dem Sitzteil des Fahrzeugsitzes und die Unterschiene ortsfest mit der Karosserie des Fahrzeuges verbunden. Die Oberschiene ist zur Längsverstellung relativ zu der Unterschiene verschieblich vorgesehen und mit einem Arretierungsmittel in der jeweiligen Position temporär fixierbar.

Im Folgenden wird die Erfindung anhand der Figuren 1 - 4 erläutert. Diese Erläuterungen sind lediglich beispielhaft und schränken den allgemeinen Erfindungsgedanken nicht ein. Diese Erläuterungen gelten für alle Gegenstände der vorliegenden Erfindung gleichermaßen.
Figur 1 zeigt eine erste Ausführungsform des erfindungsgemäßen Längsverstellers.
Figur 2 zeigt die Oberschiene des Längsverstellers gemäß Figur 1.
Figur 3 zeigt eine weitere Ausführungsform einer Oberschiene eines erfindungsgemäßen Längsverstellers.
Figur 4 zeigt noch eine weitere Ausführungsform einer Oberschiene eines erfindungsgemäßen Längsverstellers.

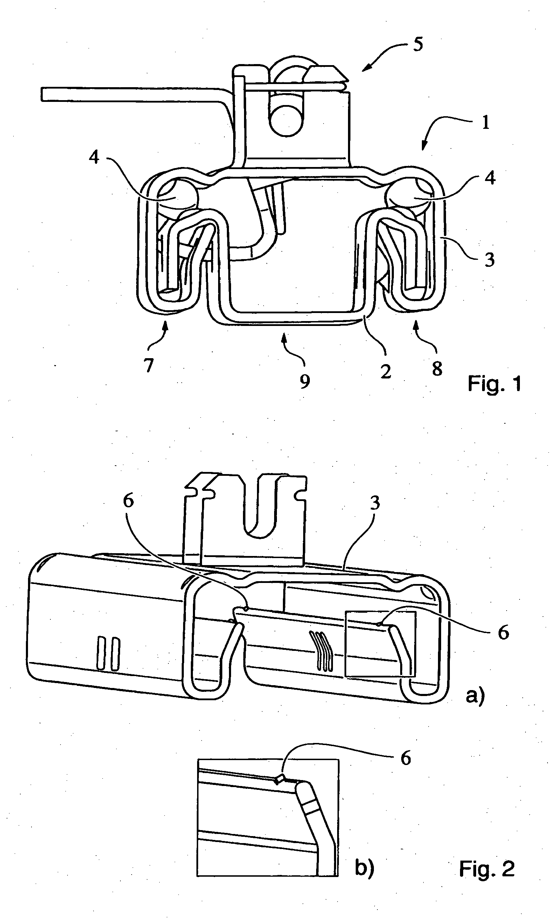

Figur 1 zeigt den erfindungsgemäßen Längsversteller 1. Dieser weist eine Unterschiene 2 auf, die vorzugsweise ortsfest beispielsweise an der Karosserie eines Fahrzeuges vorgesehen ist. Längsverschieblich dazu ist eine Oberschiene 3 vorgesehen. Die Oberschiene 3 stützt sich, bezogen auf den Querschnitt, in zwei Kontaktbereichen 7, 8 an der Unterschiene ab, in denen die Oberschiene an der Unterschiene geführt ist. Die Kontaktbereiche 7, 8 sind vorzugsweise rechts und links von einem vorzugsweise U-förmig gestalteten Mittelbereich 9 des Querschnitts der Unterschiene 2 angeordnet. In den Kontaktbereichen 7, 8 sind jeweils zwischen den beiden Schienen 2, 3 Wälzkörper, hier Kugeln 4, vorgesehen. Um den Fahrzeugsitz in der jeweils gewünschten Position arretieren zu können, weist der Längsversteller vorzugsweise ein Arretierungsmittel 5 auf, das die Oberschiene 3 lösbar relativ zu der Unterschiene arretiert. In dem vorliegenden Fall weist der Längsversteller zwei Kontaktbereiche zwischen der Ober- und der Unterschiene auf Wie Figur 1 insbesondere jedoch auch Figur 2 entnommen werden kann, sind pro Kontaktbereich 7, 8 zwei Vorsprünge 6 vorgesehen. Die Ober- und die Unterschiene berühren sich vorzugsweise lediglich an diesen beiden Vorsprüngen 6, die einstückig mit der Oberschiene vorgesehen sind und durch Umformen insbesondere Prägen oder Biegen aus dem Material der Oberschiene vorgesehen sind. Durch die Vorsprünge 6 kommt es im Wesentlichen zu punktförmigen Berührungen und damit zu einer definierten Berührungsfläche zwischen der Ober- und der Unterschiene, so dass die Reibung beim Bewegen der Oberschiene relativ zu der Unterschiene reduziert ist und ein Verdrehen der Schienen zueinander ausgeglichen werden kann. Vorzugsweise werden die Vorsprünge 6 zwischen den beiden Schienen 2, 3 elastisch deformiert, wodurch Fertigungstoleranzen ausgeglichen werden können. Die Vorsprünge 6 sind vorzugsweise auf der den Wälzkörpern 4 gegenüberliegenden Seite der Unterschiene vorgesehen. Durch die Federkraft der Vorsprünge 6 wird vorzugsweise ein leichter Druck auf die Wälzkörper ausgeübt, was insbesondere die Geräuschbildung vermindert. Um zu große Fertigungstoleranzen auszugleichen, können zusätzlich Wälzkörper unterschiedlicher Größe eingesetzt werden.

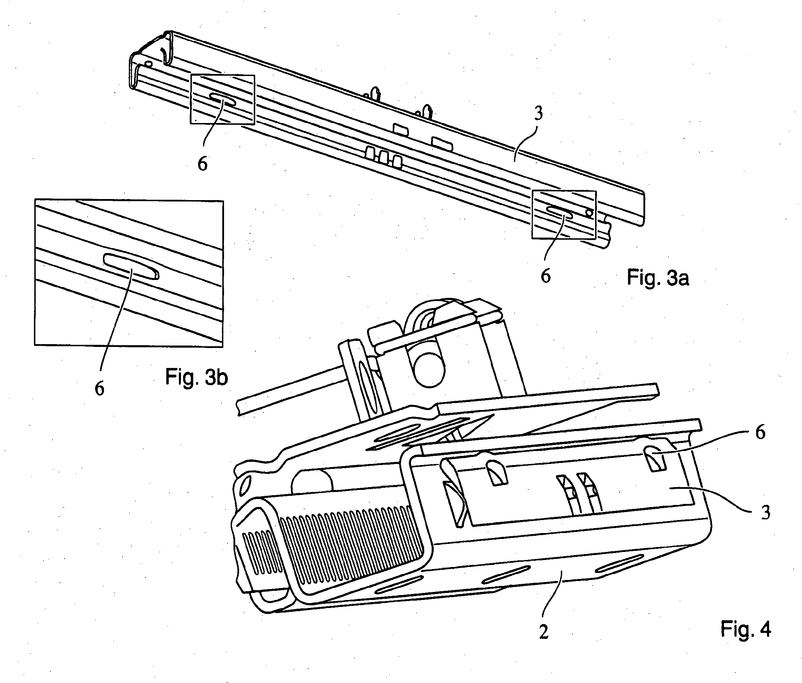

Figur 3 zeigt eine weitere Ausführungsform der Oberschiene. In dem vorliegenden Fall weist die Oberschiene zwei vorzugsweise ausgestanzte und/oder ausgeformte Vorsprünge 6 auf, die in dem vorliegenden Fall als vorzugsweise als Federelemente gestaltet sind, und die nach der Montage zwischen der Unter- und der Oberschiene elastisch eingespannt sind. Vorzugsweise sind zwei solche Vorsprünge pro Kontaktbereich vorgesehen. Ansonsten wird auf die Ausführungen gemäß den Figuren 1 und 2 verwiesen.

Figur 4 zeigt eine weitere Ausführungsform der Vorsprünge 6, die in dem vorliegenden Fall wiederum aus dem Material der Oberschiene ausgeformt sind. Die Unterschiene liegt vorzugsweise an dem oberen, halbkreisförmigen Abschnitt der Vorsprung 6 an. Vorzugsweise wird auch dieser Vorsprung zwischen den beiden Schienen elastisch deformiert. Vorzugsweise sind zwei solche Vorsprünge pro Kontaktbereich vorgesehen. Ansonsten wird auf die Ausführungen gemäß den Figuren 1 und 2 verwiesen.

### Bezugszeichenliste:

- 1: Längsverstellung
- 2: Unterschiene
- 3: Oberschiene
- 4: Wälzkörper
- 5: Arretierungsmittel
- 6: Vorsprung, Ausformung
- 7: Kontaktbereich
- 8: Kontaktbereich
- 9: Mittelbereich des Querschnitts der Unterschiene

## Patentansprüche

1. Längsversteller (1) im Fahrzeuginnenraum eines Kraftfahrzeuges mit einer Ober- und einer Unterschiene (2, 3) zwischen denen mindestens ein Wälzkörper (4) vorgesehen ist, **dadurch gekennzeichnet, dass** an der Ober- und Unterschiene (2, 3) ein Vorsprung (6) vorgesehen ist, der einen lokalen Kontaktpunkt zwischen den beiden Schienen (2, 3) bildet, und dass der Vorsprung einstückig mit der Ober- und Unterschiene vorgesehen ist, und dass der Vorsprung (6) durch Umformen insbesondere Prägen oder Biegen erzeugt ist, und daß der Vorsprung (6) federnd vorgesehen ist und der Vorsprung (6) zwischen den Schienen vorgespannt ist.

2. Längsversteller (1) nach Anspruch 1, **dadurch gekennzeichnet, dass** zwei Vorsprünge (6) vorgesehen sind.

3. Fahrzeugsitz aufweisend einen Längsversteller gemäß einem der voranstehenden Ansprüche.

## Claims

1. Longitudinal adjuster (1) in the vehicle inner space of a motor vehicle having an upper and a lower rail (2, 3), between which at least one roller member (4) is provided, **characterized in that** there is provided on the upper and lower rail (2, 3) a projection (6) which forms a local contact point between the two rails (2, 3), and **in that** the projection is provided integrally with the upper and lower rail, and **in that** the projection (6) is produced by means of shaping, in particular stamping or bending, and **in that** the projection (6) is provided so as to be resilient and the projection (6) is pretensioned between the rails.

2. Longitudinal adjuster (1) according to Claim 1, **characterized in that** two projections (6) are provided.

3. Vehicle seat having a longitudinal adjuster according to one of the preceding claims.

## Revendications

1. Dispositif de réglage longitudinal (1) dans l'habitacle d'un véhicule automobile, comprenant un rail supérieur et un rail inférieur (2, 3) entre lesquels est prévu au moins un corps de roulement (4), **caractérisé en ce qu'**une saillie (6) est prévue sur le rail supérieur et sur le rail inférieur (2, 3), laquelle forme un point de contact local entre les deux rails (2, 3) et **en ce que** la saillie est réalisée d'une seule pièce avec le rail supérieur et le rail inférieur, **en ce que** la saillie (6) est produite par déformation, en particulier matriçage ou cintrage et **en ce que** la saillie (6) est prévue sous forme élastique et la saillie (6) est précontrainte entre les rails.

2. Dispositif de réglage longitudinal (1) selon la revendication 1, **caractérisé en ce que** deux saillies (6) sont prévues.

3. Siège de véhicule présentant un dispositif de réglage longitudinal selon l'une quelconque des revendications précédentes.
